Europäisches Patentamt

(19) European Patent Office

Office européen des brevets

(11) Publication number: **0 039 154**
A1

(12) **EUROPEAN PATENT APPLICATION**

(21) Application number: 81301530.2

(22) Date of filing: 08.04.81

(51) Int. Cl.³: **F 16 C 29/02**
**F 16 H 19/04**

(30) Priority: 28.04.80 GB 8013939

(43) Date of publication of application:
04.11.81 Bulletin 81/44

(84) Designated Contracting States:
DE FR IT NL SE

(71) Applicant: CAM GEARS Limited
45, Wilbury Way Hitchin
Hertfordshire SG4 0TU(GB)

(72) Inventor: Adams, Frederick John
"Pelba" 27 Princes Road
Clevedon Avon(GB)

(74) Representative: Walters, Frederick James et al,
Urquhart-Dykes & Lord 47 Marylebone Lane
London W1M 6DL(GB)

(54) **A bearing assembly.**

(57) A bearing assembly which may be applied to a rack and pinion gear has a housing 2a through which a rack bar 1 is longitudinally displaceable by rotation of a pinion 4. Located between opposing part cylindrical and eccentric surfaces 6 and 7 on the rack bar and housing respectively are bearing means 5 which slidably supports the rack bar with its rack in engagement with the pinion. The bearing means 5 has two pads 8 and 9 which act as wedges between the surfaces 6 and 7. Spigots 8a and 9a on the pads co-operate with slots 14 and 15 in the housing to restrain the pads against longitudinal displacement whilst permitting cylindrical displacement thereof. The pads 8 and 9 are spring loaded one relative to the other by spring means 11 which urges the pads into wedge engagement between the surfaces 6 and 7 to provide support for the rack bar and automatically compensate for wear between the relatively slidable surfaces of the various components.

A spring 11 can be integrally moulded with the pads 8 and 9 or formed as a separate spring member.

FIG.1.

- 1 -

DESCRIPTION

This invention relates to a bearing assembly.

More particularly, the invention concerns a bearing assembly having a housing within which a member extends longitudinally and is longitudinally displaceable; bearing means is provided within the housing for slidably supporting the member laterally during its longitudinal displacement and which bearing means reacts between the member and the housing.  A bearing assembly as above described is usually included, and may conveniently be considered, in a rack and pinion assembly where the longitudinally displaceable member is a rack bar the rack of which engages with a pinion rotatably mounted by the housing so that by rotation of the pinion the rack bar is displaced longitudinally through the housing.  In rack and pinion assemblies the bearing means usually serve to maintain the rack bar with its rack in engagement with the pinion and conventionally the bearing means primarily consists of a yoke which straddles the rack bar and is spring loaded relative to the housing to provide the necessary support. Examples of this conventional form of yoke support are disclosed in U.K. Patent Specification No. 1,324,322 and German Specification No. 1,605,911. While the spring loading of a yoke which straddles the rack bar may support the rack bar symmetrically and compensate for wear between the yoke and rack bar, the bulk of the yoke, its spring loading and components such as shims, screws and the like which are generally provided to permit adjustment of the resilient support frequently calls for a multi-part and intricate assembly with a yoke chamber being incorporated in the housing to accommodate the yoke and its spring loading - these features of course add considerably to the cost of the bearing assembly and generally produce a somewhat complicated structure. In an attempt to reduce manufacturing and assembly costs a simple form of bearing has been produced as disclosed in U.K. Patent Specification No. 2,013,304 where a plastics moulded one piece "U" shaped bearing is merely snapped into the housing to straddle the rack bar and provide symmetrical support thereto for maintaining its rack in engagement with the pinion; with such a simple form of bearing it is possible for the plastics to be pre-loaded during its assembly with the rack bar whereby the latter is resiliently biased into engagement with the pinion - however, while such pre-loading may accommodate for slight wear between the slidably co-operating rack bar and bearing surfaces it will generally be insufficient for practical purposes to accommodate for severe wear or considerable lateral displacement of the rack bar as may be encountered under severe adverse conditions of use (such as when the rack and pinion assembly is incorporated in a vehicle steering gear and the rack bar is vibrated by the vehicle being steered over a rough terrain).

In an attempt to compensate for wear between the rack bar and bearing surfaces and also to provide adequate support for the rack bar during adverse conditions of use as aforementioned it has also been proposed in U.K. Patent Specification No. 1,451,731 to provide a single spring loaded wedge shaped bearing member which extends around the periphery of the rack bar and is eccentric therewith so that the eccentric bearing member is biased into wedged engagement between the rack bar and housing to maintain the rack bar firmly in engagement with the pinion - although this proposal adequately compensates for wear and lateral displacement between the rack bar and the housing and also alleviates the requirement for a yoke chamber it has the disadvantage that the rack bar is eccentrically supported and can therefore bias the rack teeth into a condition which adversely effects the desirable characteristics of the rack and pinion gear.

It is an object of the present invention to provide a simple form of bearing assembly which alleviates the disadvantages of the previous proposals in so far as it permits ease of assembly, requires no special chambers within the housing for its location, can be used to achieve symmetrical support for the longitudinally displaceable member, is self compensating for wear and lateral displacement of the member relative to the housing and requires no pre-setting by use of shims, adjustment screws or the like.

According to the present invention there is provided a bearing assembly comprising; a housing; a member which extends longitudinally in the housing and is longitudinally displaceable relative thereto, and bearing means slidably supporting the member laterally within the housing for its longitudinal displacement, said bearing means reacting between a smooth peripheral surface part of the member and an opposing surface part of the housing, characterised in that the bearing means comprises two pads peripherally spaced around the smooth surface part of the member and spring means reacting between said pads whereby the pads react one against the other through said spring means to bias the pads as wedges between the opposed surface parts of the member and the housing for supporting the member, and the pads being peripherally displaceable under the biasing of the spring means to maintain said support for the member.

By the present invention the pads react one against the other to support the longitudinally displaceable member  for its sliding movement relative to the housing and,   . by ensuring that the spring means is appropriately   pre-loaded on assembly of the bearing, the support effected by the pads can be self compensating to accommodate for wear between the relatively sliding surfaces and also for possible lateral displacement as may occur, for example during vibration of the member relative to the housing. Desirably the pads are substantially wedge shaped for wedge engagement between the opposed surface parts of the member and the housing while the spring means may act either compressively between the pads to bias the pads away from each other around the periphery of the member or under tension to bias the pads towards each other around the periphery of the member.

The spring means may comprise a spring component such as  a helical spring or a mass of reslient material which is located peripherally between the pads to bias them in the appropriate sense for maintaining support between the member and its housing.   Preferably however, the spring means is formed integral with the pads, for example by a one piece moulding in resilient plastics material and such spring means may pair
comprise, for example, a longitudinally spaced and opposed/ of spring leafs or wishbones each of which interconnects the two pads.

During relative longitudinal sliding movement between the pads and member it will be apparent that frictional forces applied to the pads will tend to displace the pads longitudinally. To alleviate this it is preferred the pads are restrained from longitudinal displacement relative to the housing whilst being capable of peripheral displacement relative to the housing and conveniently the pads co-operate with the housing through peripherally extending track means for this purpose. In a preferred construction the aforementioned track means comprises at least one peripherally extending slot or recess in the housing with which spigot parts of the pads slidably co-operate. By this latter arrangement the pads with their spring means applied may be snapped into engagement with the slot or recess in the housing so that upon assembly of the longitudinally displaceable member in the housing and with the pads the latter are pre-loaded as the member settles into its operative position.

Usually the smooth surface part of the member and also the surface part of the housing over which the pads are peripherally displaceable will be substantially part cylindrical and in this arrangement it is desirable that the opposing part cylindrical surface parts are eccentric so that the pads co-operate as wedges between those opposing surface parts.

As previously implied the bearing assembly is particularly suitable for use in a rack and pinion gear as may be intended for use in a vehicle steering system and as a further feature there is provided a rack and pinion gear which includes a bearing assembly in accordance with the present invention and in which the longitudinally extending member is a rack bar the rack of which co-operates with a pinion mounted by the housing to be axially rotatable so that by rotation of the pinion the rack bar is displaced longitudinally through the housing and wherein the bearing means straddles the rack bar on the side thereof remote from the pinion to support the rack bar for engagement of its rack with the pinion and to restrain displacement of the rack bar relative to the housing in a direction which is substantially parallel to the axis about which the pinion rotates.

Embodiments of the present invention will now be described, by way of example only, with reference to the accompanying illustrative drawings, in which:-

Figure 1 is a lateral section through part of a rack and pinion assembly which incorporates bearing means in accordance with the present invention;

Figure 2 is a plan view of integrally moulded pads and spring means forming part of the bearing means shown in Figure 1;

Figure 3 is a side elevation of the moulding shown in Figure 2;

Figure 4 is an end elevation of the moulding shown in Figure 2, and

Figure 5 is a lateral section through a rack and pinion assembly similar to that shown in Figure 1 and which incorporates a modified form of bearing means in accordance with the present invention.

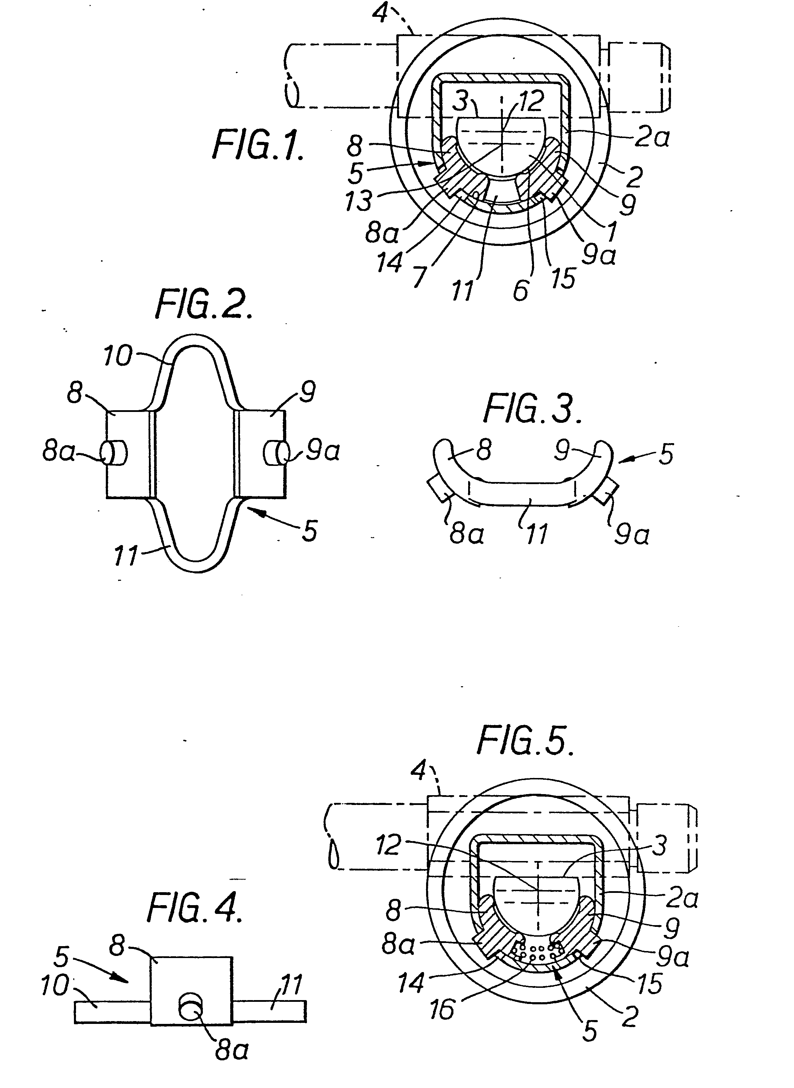

The bearing assembly shown in Figure 1 is in the form of a rack and pinion gear in which a longitudinally extending rack bar 1 is longitudinally displaceable through a rack bar housing 2. A rack 3 on the rack bar co-operates with a pinion (indicated at 4) mounted in the housing 2 to be axially rotatable so that by rotation of the pinion the rack bar 1 is displaced longitudinally through the housing. Bearing means shown generally at 5 slidably supports the rack bar 1 laterally within an extended part 2a of the housing, such bearing means 5 reacting between a smooth part cylindrical surface 6 of the rack bar and an opposing smooth part cylindrical surface 7 of the housing part 2a.

The bearing means 5 comprises two pads 8 and 9 which are circumferentially spaced around the surface 6 of the rack bar and springs 10 and 11 react between the pads 8 and 9 in a sense to bias the pads circumferentially away from each other.

As indicated in Figure 1, the opposing part cylindrical surfaces 6 and 7 are eccentric

(the surface 6 has its centre at 12 and the surface 7 has its centre at 13) and the pads 8 and 9 are substantially wedge-shaped to conform with the eccentricity of the chamber within which they are located between the opposing surfaces 6 and 7 for wedge engagement of the pads between the opposing surface parts of the rack bar and the housing 2a.

The bearing means 5 in the Figure 1 embodiment (and as better illustrated in Figures 2 to 4) is formed as a one piece moulding in a resilient plastics material such as nylon or acetal which have good low friction characteristics and appropriate memories. In the one piece moulding the springs 10 and 11 are in the form of leaf springs which interconnect the pads 8 and 9 (but it will be appreciated that these springs can be in the form of a wishbone or other appropriate design to bias the pads away from each other when the springs are under compression). Integrally moulded with the pads 8 and 9 are spigots 8a and 9a respectively which respectively co-operate with circumferentially extending slots 14 and 15 in the wall of the housing 2a. The spigots 8a and 9a are slidably received in their respective slots 14 and 15 to be capable of circumferential displacement relative to the housing 2a but are restrained thereby against longitudinal movement relative to the housing 2a. On assembly of the rack and pinion gear the one piece moulding comprising the pads, springs and spigots is inserted into the housing 2a with the pads 8 and 9 squeezed towards each other to compress the springs 10 and 11 until the spigots 8a and 9a can snap engage with the slots 14 and 15 respectively. The rack bar 1 is now fed through the housing 2 to co-operate with the pinion 4 and the two pads so that, in its correct location, the rack bar displaces the pads circumferentially towards each other to a condition of equilibrium where the springs 10 and 11 are in a state of compression and act as wedges to bias the rack bar for its rack 3 to engage with the pinion. It will be noted from Figure 1 that the bearing means 5 straddles the rack bar 1 symmetrically on the side of the rack bar remote from its rack 3 and biases the rack bar symmetrically for its rack to engage with the pinion.   Furthermore, the circumferentially spaced location of the pads 8 and 9 restrains lateral displacement of the rack bar 1 in the general direction of the pinion axis.

As wear takes place on the pad members 8 and 9 it will be apparent that such wear can be compensated for by circumferential displacement of the two pads reacting one against the other through the springs 10 and 11 and within the limits determined by the slots 14 and 15.   Furthermore, should the rack bar 1 be subjected to lateral vibration (as may occur during use of  a  steering gear in adverse conditions) the resilience in the springs 10 and 11 can cause displacement of the pads more firmly into wedge engagement between the rack bar and the housing to restrain the vibration.   The surfaces of the pads 8 and 9 which co-operate with the rack bar may be part cylindrical to be substantially complementary with the surface 6 and similarly the surfaces of the pads which co-operate with the surface 7 of the housing may also be part cylindrical for substantially complementary engagement.   It will be appreciated however that the surfaces of the pads which engage with the rack bar may have longitudinally extending grooves to facilitate oil flow therethrough or to vary the support characteristics which are required of the pads.

Although it is preferred that the bearing means 5 is a one piece moulding as shown in Figures 2 to 4 since this facilitates assembly of the bearing and storage, the bearing means can alternatively be a multi-part structure as shown in Figure 5 where the pads 8 and 9 are separate mouldings (including the spigots 8a and 9a) while the leaf springs 10 and 11 are replaced by one or more separate helical springs 16 which reacts between the pads in a similar manner to the integrally moulded springs. When using independent springs 16 the pads 8 and 9 may be appropriately moulded with recesses within which the ends of the spring or springs 16 are received.

- 15 -

CLAIMS

1.    A bearing assembly comprising;

     a housing;

     a member which extends longitudinally in the
housing and is longitudinally displaceable relative
thereto, and

     bearing means slidably supporting the member
laterally within the housing for its longitudinal
displacement, said bearing means reacting between a
smooth peripheral surface part of the member and an
opposing surface part of the housing, characterised in
that the bearing means comprises two pads peripherally
spaced around the smooth surface part of the member and
spring means reacting between said pads whereby the
pads react one against the other through said spring
means to bias the pads as wedges between the opposed
surface parts of the member and the housing for supporting the member, and the pads being peripherally displaceable under the biasing of the spring means to maintain said support for the member.

2.    An assembly as claimed in claim 1 in which the pads are substantially wedge shaped for wedge engagement between the opposed surface parts of the member and the housing.

3.    An assembly as claimed in either claim 1 or claim 2 in which the spring means acts compressively between the pads to bias the pads away from each other around the periphery of the member.

4.    An assembly as claimed in any one of the preceding claims in which the spring means is formed integral with the pads.

5.    An assembly as claimed in claim 4 in which the spring means and pads are integrally formed by moulding in resilient plastics material.

6.    An assembly as claimed in claim 5 in which the spring means comprises a longitudinally opposed pair of spring leafs or wishbones each of which interconnects the two pads.

7.    An assembly as claimed in any one of claims 1 to 3 in which the spring means comprises a helical spring component which is located peripherally between the pads.

8.   An assembly as claimed in any one of the preceding claims in which the pads co-operate with the housing through peripherally extending track means by which said pads are restrained from longitudinal displacement relative to the housing whilst being capable of peripheral displacement relative to the housing.

9.   An assembly as claimed in claim 8 in which the track means comprises at least one peripherally extending slot or recess in the housing with which spigot parts of the pads slidably co-operate.

10.  An assembly as claimed in any one of the preceding claims in which the smooth surface part of the member is substantially part cylindrical.

11.  An assembly as claimed in any one of the preceding claims in which the surface part of the housing over which the pads are peripherally displaceable is substantially part cylindrical.

12.  An assembly as claimed in claim 11 when appendant to claim 10 in which the part cylindrical and opposing surface parts of the member and housing are eccentric.

13. A rack and pinion gear which includes a bearing assembly as claimed in any one of the preceding claims in which the longitudinally extending member is a rack bar the rack of which co-operates with a pinion mounted by the housing to be axially rotatable so that by rotation of the pinion the rack bar is displaced longitudinally through the housing and wherein the bearing means straddles the rack bar on the side thereof remote from the pinion to support the rack bar for engagement of its rack with the pinion and to restrain displacement of the rack bar relative to the housing in a direction which is substantially parallel to the axis about which the pinion rotates.

FIG.1.

FIG.2.

FIG.3.

FIG.5.

FIG.4.

0039154

# European Patent Office

## EUROPEAN SEARCH REPORT

| DOCUMENTS CONSIDERED TO BE RELEVANT | | | CLASSIFICATION OF THE APPLICATION (Int. Cl.¹) |
|---|---|---|---|
| Category | Citation of document with indication, where appropriate, of relevant passages | Relevant to claim | |
| | FR - A - 2 185 319 (EHRENREICH) <br> * The whole document * <br><br> & GB - A - 1 427 016 <br><br> ---- | 1,9, 10,13 | F 16 C 29/02 <br> F 16 H 19/04 |

**TECHNICAL FIELDS SEARCHED (Int. Cl.³)**

F 16 C
F 16 H
B 62 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| | | |
|---|---|---|
| The present search report has been drawn up for all claims | | |
| Place of search <br> The Hague | Date of completion of the search <br> 04-08-1981 | Examiner <br> BARON |

EPO Form 1503.1 06.78